# EUROPEAN PATENT APPLICATION

(11) **EP 1 072 298 A1**
(43) Date of publication of application: **31.01.2001**
(21) Application number: 00115066.3
(22) Date of filing: 26.07.2000
(51) Int. Cl.: A63F 13/10

(54) **Display method for a confrontation type video game for displaying different information to players, storage medium and video game system**

(30) Priority: 26.07.1999 JP 24370599; 27.07.1999 JP 21291599
(71) Applicant: Konami Corporation, Minato-ku, Tokyo (JP)
(72) Inventor: Shimomura, Satoshi, Konami Computer Entertainment, Shinjuku-ku, Tokyo (JP); Kubo, Morikuni, Konami Computer Entertainment, Shinjuku-ku, Tokyo (JP); Watanabe, Tsutomu, Konami Computer Entertainment, Shinjuku-ku, Tokyo (JP)
(74) Representative: VOSSIUS & PARTNER

(57) **Abstract**

A display method for a video game jointly using a video game device main unit and data display devices, wherein the video game device main unit and the data display devices are connected by interfaces, and data is created by the video game device main unit. Thereupon, data is transferred from the video game device main unit to the data display devices via the interfaces. After data transfer, the data display devices are detached, and a portion of the data is displayed by the video game device main unit, whilst a further portion of the displayed data is shown on the data display devices. The video game device main unit executes predetermined processing in response to input operations performed via the controller.

## Description

The present invention relates to the display of game screens by a video game device, and more particularly, to the display of game screens by combined use of a video game device main unit and data display device.

In a single video game device, screens are output to a single image display device, and in cases where a plurality of players are playing a game simultaneously, the information displayed on the screen is shared by all the players. Hence, there is a limitation on the types of games which can be played on the video game device. Specifically, whilst it is possible to play games wherein all the players share information, such as a racing game or combat information, it is, however, not possible to play common card games, such as poker, mah-jong, or the like, in which players compete against each other. This is because, in such games, information that is to be shared by all players, such as cards laid to the playing area, is mixed with information that should not be seen by the other player(s), such as one's own hand of cards. Such games will be called confrontation type games hereinafter so as to distinguish them from the other games.

In realizing a confrontation type of game of this kind in the form of a video game, provision is conventionally made about a plurality of image display devices. Specifically, the plurality of the image display devices have been placed in opposing positions, or in adjacent positions with a partitioning screen located between the display devices, in order to hide the screen of each player from an opposing player. However, conventional confrontation style video game systems of this kind entail the following problems.

It is necessary to provide a plurality of image display devices in the system, and since standard image display devices are expensive, the cost of the system is high.

In a card game, or the like, such as that described above, methods must be considered to express opposing players and to sense the states of the cards laid by each player. In addition, it is also necessary to consider a method of bargaining with the other players and, in other words, methods of communicating between players. However, even though communication between players is not completely possible in the conventional system.

In a general home video game device, image data cannot be output to a plurality of image display devices by a single game device. In some cases, confrontation type games are played by exchanging data between a plurality of home video game devices which are mutually connected by cables, but this is expensive. Moreover, it is rare for a general household to possess a plurality of home video game devices of the same type.

In a further type of conventional confrontation video game system, a confrontation game is played, with data exchanging between two portable game devices connected by a cable. In this kind of game system, the portable game devices are respectively provided with image display devices, and since portable game devices are relatively inexpensive, the aforementioned problems can be eliminated to some extent. However, each player tends to concentrate only on the screen of his or her own portable game device, and ultimately, this impedes smooth communication between the players.

Yet a further example of a conventional confrontation type video game system is described in Japanese Unexamined Patent Publication (JP-A) No. H07-51467, namely, 51467/1995 and Japanese Unexamined Patent Publication (JP-A) No. H10-235016, namely, 235016/1998. In this conventional technology, display devices are provided on the controllers of a video game device, thereby providing different information to each player. However, problems of the following kinds arise in this conventional technology.

It is necessary to provide the controllers of the video game device with interfaces capable of transmitting image signals, and hence this method cannot be used in general video game devices which are not provided with interfaces of this kind.

This technology causes the controllers to increase in size and weight. Moreover, since the display surface area needs to have a certain size, there are limits on miniaturization. Controllers which are too large and too heavy are liable to cause adverse effects on device operability. More particularly, a type of game which does not require display of individual information is usually a game which requires a high degree of action, and hence such controllers can create a marked obstacle when playing a game of this kind in the video game device described above.

Video game devices have a general compatibility in that games of various types can be played thereon depending on the software used, but the aforementioned conventional technology impedes this compatibility.

The present invention was devised with the foregoing in view. More specifically, the object of the present invention is to provide a data output method and storage medium whereby screens for a confrontation type of video game can be displayed, at relatively low cost, without impeding communication between players.

Moreover, a further object of the present invention is to provide unit for transmitting information to individual players, without impeding the general compatibility of video game devices.

In order to resolve problems such as the foregoing, the present invention provides a confrontation-type video game display method, storage medium and confrontation-type video game system of the following kinds.

Namely, the present invention is a display method for a confrontation-type video game, jointly using a video game device main unit provided with interfaces for transferring data with external devices and controllers for receiving input operations, and a data display device provided with an interface corresponding to the interfaces, display unit and input unit for receiving input operations, whereby items are displayed on either one of or both of the video game device main unit and the data display device, the display method comprising: a first step of connecting the video game device main unit and data display device by unit of the interfaces; a second step of creating data associated with the items in the video game device main unit; a third step of transferring the data created in the second step from the video game device main unit to the data display device by unit of the interfaces; a fourth step of releasing the connection made in the first step; a fifth step whereby the video game device main unit displays a portion of the data created at the second step; a sixth step whereby the data display device displays a further portion of the data displayed at the fifth step, by the display unit; and a seventh step whereby the video game device main unit executes predetermined processing by reference to the further portion of data displayed at the fifth step, in response to input operations performed via a controller.

According to a display method for a confrontation-type video game of this kind, after a video game device main unit and a data display device have been temporarily connected and data has been transferred between same, when a portion of the data associated with items is displayed in the video game device main unit, further data associated with same can be displayed by the data display device, and therefore a player is able to refer to items allocated to the controller being used by that player, without being this being revealed to other players.

In this display method for a confrontation-type video game, if a single video game device main unit and a plurality of data display devices are used, and if the second process creates data for each data display device, then it is possible to change the combination of data that can be referenced by each player.

In this display method for a confrontation-type video game, the data transferred at the third step may be saved data for a game.

The present invention also provides a display method for a confrontation-type video game, jointly using a video game device main unit provided with interfaces for transferring data with external devices and controllers for receiving input operations, and a data display device provided with an interface corresponding to the interfaces, display unit, input unit for receiving input operations, and editing unit for editing and creating data, whereby items are displayed on either one of or both of the video game device main unit and the data display device, the display method comprising: a first step of connecting the video game device main unit and data display device by unit of the interfaces; a second step of creating data associated with the items in the data display device; a third step of transmitting the data created in the second step from the data display device to the video game device main unit by unit of the interfaces; a fourth step of releasing the connection made in the first step; a fifth step whereby the video game device main unit displays a portion of the data transferred at the third step; a sixth step whereby the data display device displays a further portion of the data displayed at the fifth step, by the display unit; and a seventh step whereby the video game device main unit executes predetermined processing by reference to the further portion of data displayed at the fifth step, in response to input operations performed via a controller.

This method also brings similar advantages to the method described above.

In this video game display method, if a single video game device main unit and a plurality of data display devices are used, then independent game environments can be provided to each respective player.

In this display method for a confrontation-type game, the data transferred at the third step may be saved data for a game.

In this display method for a confrontation-type game, a representative example of an item is a playing card, mah-jong tile or chess piece.

The present invention also provides a computer-readable storage medium storing a first program being a confrontation game program executed in a video game device main unit comprising an interface for transferring data with external devices, and controllers for receiving input operations, whereby a confrontation game is implemented whilst displaying items associated with each controller, and a second program being executed by a data display device provided with an interface corresponding to the interfaces, display unit, input unit for receiving input operations, and program executing unit; wherein the first program is a program for causing the video game device main unit to execute: a process 1-1 whereby data associated with the items is created; a process 1-2 whereby data created by the process 1-1 is transmitted to the data display device via the interfaces; a process 1-3 whereby a portion of the data created by the process 1-1 is displayed; a process 1-4 whereby predetermined processing A is implemented with reference to the data displayed by the process 1-3, in response to input operations received via a controller; and the second program is a program for causing the data display device to execute: a process 2-1 whereby data created by the process 1-1 is received from the video game device main unit by unit of the interfaces; and a process 2-2 whereby a further portion of the data displayed by the video game device main unit at the process 1-3 is displayed by the display unit.

The present invention also provides a computer-readable storage medium storing a first program being a confrontation game program executed in a video game device main unit comprising an interface for transferring data with external devices, and controllers for receiving input operations, whereby a confrontation game is implemented whilst displaying items associated with each controller, and a second program being executed by a data display device provided with an interface corresponding to the interfaces, display unit, input unit for receiving input operations, and program executing unit; wherein the first program is a program for causing the video game device main unit to execute: a process 1-1 whereby data is received from the data display device by unit of the interfaces; a process 1-2 whereby a portion of the data received by the process 1-1 is displayed; and a process 1-3 whereby predetermined processing A is implemented with reference to the data displayed by the process 1-2, in response to input operations received via a controller; and the second program is a program for causing the data display device to execute: a process 2-1 whereby data associated with the items is created; a process 2-2 whereby data is transferred to the video game device main unit by unit of the interfaces; and a process 2-3 whereby a further portion of the data displayed on the video game device main unit by the process 1-2 is displayed by the display unit.

The first and second programs stored in these storage mediums may also be stored on the same storage medium.

If the first and second programs stored in these storage mediums are executed in a suitable video game device main unit and data display device, then after a video game device main unit and a data display device have been temporarily connected and data has been transferred between same, when a portion of the data associated with items is displayed in the video game device main unit, further data associated with same can be displayed by the data display device, and therefore a player is able to refer to items allocated to the controller being used by that player, without being this being revealed to other players.

In these storage mediums, if the first program is applied to a plurality of data display devices, then rather than simply being able to display different information on each data display device, it is possible to set the details of all selectable data as the data to be displayed, for each data display device.

In these storage mediums, processing A may be such that it causes the video game device main unit to execute: processing for displaying images previously associated with data referenced for each data display device, in relation to each data display device; and processing for comparing the referenced data for each data display device. By adopting this composition, a player is able to recognize, visually, by images, the correlation between the contents displayed on the video game device main unit and the data display device, and hence a more satisfactory game environment is provided to the player. Moreover, it is also possible to judge the outcome of a confrontation-type video game on the results of a comparison between the data referenced by each data display device, in other words, the data of each player.

In these storage media, typical examples of an item are a playing card, a mah-jong tile or a chess piece in a game.

The present invention also provides a confrontation-type video game system comprising a main game device provided with a plurality of controllers, and a data display device, for implementing a confrontation type of game whilst displaying items associated with each of the controllers, wherein the video game device main unit comprises: an interface for transferring data with the data display device; a controller for receiving input operations; data creating unit for creating data associated with the items; unit for transferring data to the data display device by unit of the interface; extracting and displaying unit for displaying a portion of the data created by the data creating unit; and unit for executing predetermined processing A by reference to a further portion of the data displayed by the extracting and displaying unit, in response to input operations received via a controller; and the data display device comprises: an interface corresponding to the interface; unit for receiving data from the video game device main unit by unit of the interface; display unit; input unit for receiving input operations; and unit for displaying a further portion of the data displayed by the extracting and displaying unit, in response to input operations received via the input unit.

The present invention also provides a confrontation-type video game system comprising a main game device provided with a plurality of controllers, and a data display device, for implementing a confrontation type of game whilst displaying items associated with each of the controllers, wherein the video game device main unit comprises: an interface for transferring data with the data display device; a controller for receiving input operations; extracting and displaying unit for displaying a portion of the data received from the data display device via the interface; and unit for executing predetermined processing A by reference to a further portion of the data displayed by the extracting and displaying unit, in response to input operations received via the controller; and the data display device comprises: an interface corresponding to the interface; display unit; input unit for receiving input operations; data creating unit for creating data associated with the items; unit for transferring data created by the data creating unit to the video game device main unit by unit of the interface; and unit for displaying a further portion of the data displayed by the extracting and displaying unit, by the display unit.

If these confrontation-type video game systems are constituted by a single video game device main unit and a plurality of data display devices, then it is possible to provide independent game environments respectively to each player.

In these confrontation-type video game systems, the processing A may comprise: processing for displaying images previously associated with data referenced for each data display device, in relation to each data display device; and processing for comparing the referenced data for each data display device. By adopting this composition, a player is able to recognize, visually, by images, the correlation between the contents displayed on the video game device main unit and the data display device, and hence a more satisfactory game environment is provided to the player. Moreover, it is also possible to judge the outcome of a confrontation-type video game on the results of a comparison between the data referenced by each data display device, in other words, the data of each player.

In these confrontation-type video game systems, the interfaces may be memory card interfaces of the video game device main unit, and the data display devices may comprise the function of an external storage device of the video game device main unit. In other words, the data display devices may be memory card devices.

In these confrontation-type video game systems, typical examples of an item are a playing card, a mah-jong tile or a chess piece in a game.
Fig. 1 is a system composition diagram of a confrontation-type video game system 100 relating to one embodiment of the present invention;
Fig. 2 is a functional block diagram of a video game device main unit 200;
Figs. 3A and 3B are functional block diagrams for describing a memory card device 300;
Fig. 4 is a compositional example of a screen displayed by a video game device main unit 200 on a display device 120;
Fig. 5 is a compositional example of a screen displayed by a video game device main unit 200 on a display device 120;
Figs. 6A to 6C are views for describing the composition of a table used in a confrontation-type video game system 100; Fig. 7 is a flowchart describing the operation of a confrontation-type
video game system 100;
Fig. 8 is a flowchart describing card data display processing; and
Fig. 9 is an example of a screen displayed by a memory card device 300 in card data display processing.

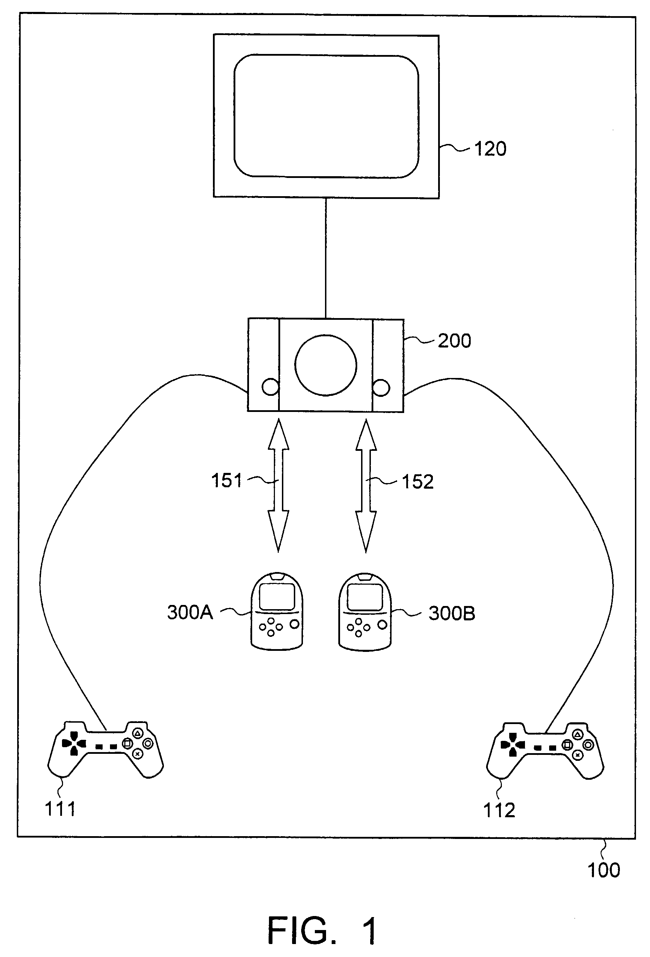

The confrontation-type video game system 100 according to one embodiment of the present invention is now described with reference to Fig. 1.

The video game device main unit 200 is a general home video game device, which reads game programs out of a storage medium, such as a CD-ROM, or the like, and displays a video game on a display device 120, such as a television receiver, or the like. People or players play a game by manipulating controllers 111 and 112. In the example described below, the person playing the game by using controller 111 is called player 1 and the person playing the game by using controller 112 is called player 2. Apart from these controllers, in the present system, player 1 uses a memory card device 300A and player 2 uses a memory card device 300B, as data display devices. Moreover, reciprocal data transfer is possible between the video game device main unit 200 and the memory card devices 300A, 300B, by unit of memory card interfaces 151 and 152.

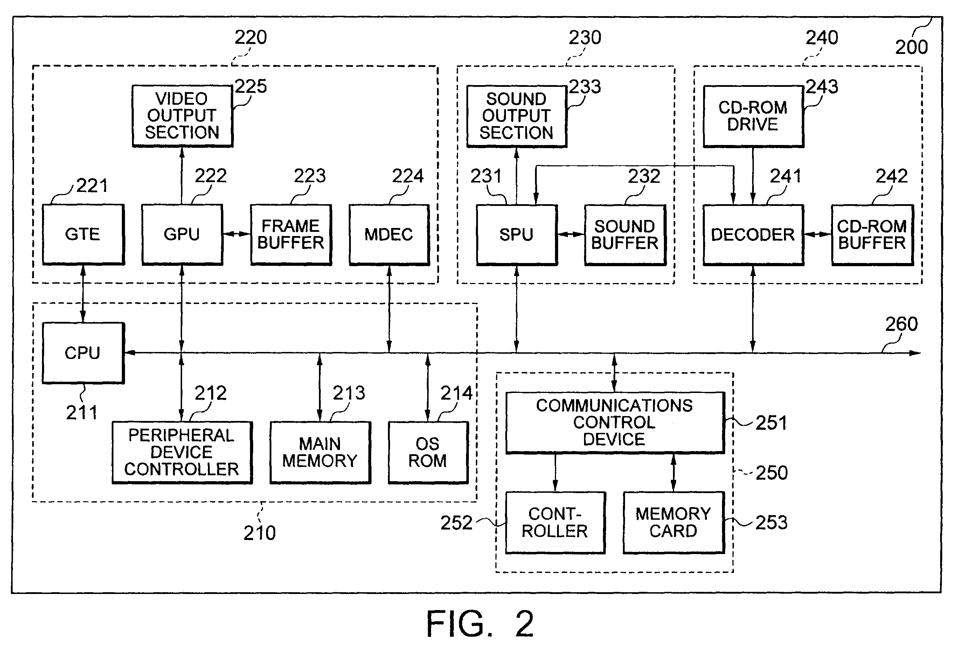

Next, the elements of the video game device main unit 200 will be described with reference to Fig. 2.

The video game device main unit 200 comprises: a control section 210 for controlling the operation of the whole device; an image processing section 220 for performing processing relating to image display; a sound processing section 230 for performing processing relating to sound output; an auxiliary memory control section 240 for reading out game programs and various data from a storage medium; a communications control section 250 for reading and writing data, such as player operations, game settings, game status, and the like, and controlling input and output of other data; and a main bus 260 for connecting from the aforementioned control section 210 to the communications control section 250.

Next, the internal elements of the system from the control section 210 to the communications control section 250 is described.

The control section 210 comprises: a CPU 211; a peripheral device controller 212 for performing interrupt control, time control, memory control, direct memory access (DMA) transfer control, and the like; a main storage medium (main memory) 213 consisting of a RAM; and a ROM 214 storing a program, such as an operating system (OS), or the like, for controlling the main memory 213, image processing section 220 and sound processing section 230, and the like. The CPU 211 controls the whole device by executing the OS stored in the ROM 214. The CPU 211 is also equipped with a command cache and a scratch-pad memory, and it manages the actual memory.

The image processing section 220 comprises: a geometry transfer engine (GTE) 221 consisting of a co-ordinates calculating co-processor for performing processing, such as co-ordinates conversion, or the like; a graphics processing unit (GPU) 222 for performing drawing in accordance with drawing commands from the CPU 211; a frame buffer 223 for storing images drawn by the GPU 222; an image decoder (MDEC) 224 for decoding image data which has been directly converted by so-called discrete cosine transform, or the like, and then further compressed and encoded; and a video output section 225, such as a display device, or the like.

The sound processing section 230 includes: a sound reproduction processor (SPU) 231 for generating sounds based on instructions from the CPU 211; a sound buffer 232 for storing data for sounds, music, and the like, and sound source data, read out from a CD-ROM; and a sound output section 233, such as an amplifier, speaker, and the like, for outputting the sounds generated by the SPU 231.

The auxiliary storage control section 240 comprises: a CD-ROM drive device 243 for reproducing programs, data, and the like, stored on a CD-ROM disk; a decoder 241 for decoding programs, data, and the like, stored with an appended error correction code (ECC), for example; and a CD-ROM buffer 242 for temporarily storing data reproduced by the CD-ROM drive device 243.

The communications control section 250 comprises: a communications control device 251 for controlling communications with the CPU 211 through the main bus 260; a controller 252 for inputting instructions from a user; and a detachable memory card 253, which is a readable and writeable storage medium for storing game settings, and the like.

Next, the basic operation of the video game device main unit 200 will be described.

When the power supply to the video game device main unit 200 is switched on, the OS stored in the ROM 214 is executed by the CPU 211, and the image processing section 220, sound processing section 230, and the like, are put into active states under the control of the OS. Firstly, the OS performs initialization, such as operational verification, and the like, of the overall device, whereupon it controls the auxiliary storage control section 240 and executes a game program stored on a CD-ROM accommodated in the CD-ROM drive device 243.

Then, the CPU 211 controls the image processing section 220, sound processing section 230, and the like, in accordance with the game program being executed and the inputs performed by the player via the controller 252, and it displays images by the video output section 225, whilst also outputting sounds, such as sound effects, music, and the like, by the sound output section 233. If the game is temporarily suspended, then the current game status is written to the memory card 253 as saved data. When a suspended game is restarted, this saved data is read out and the status of the game in progress is recreated.

Next, the elements of the memory card devices 300A, 300B in the confrontation game system 100 will be described (hereinafter, both devices are generally termed 'memory card device 300'). The memory card device 300 is a device which is used by connecting it to the video game device main unit 200, and such a memory card device is disclosed in Japanese Unexamined Patent (JP-A) Publication No. H11-7504, namely, 7504/1999. Here, the points thereof which relate in particular to the present invention will be described.

The memory card device 300 is connected to the communications control device 251 in place of a normal memory card 253, and it has the functions of a normal memory card, in other words, the function of storing game data.

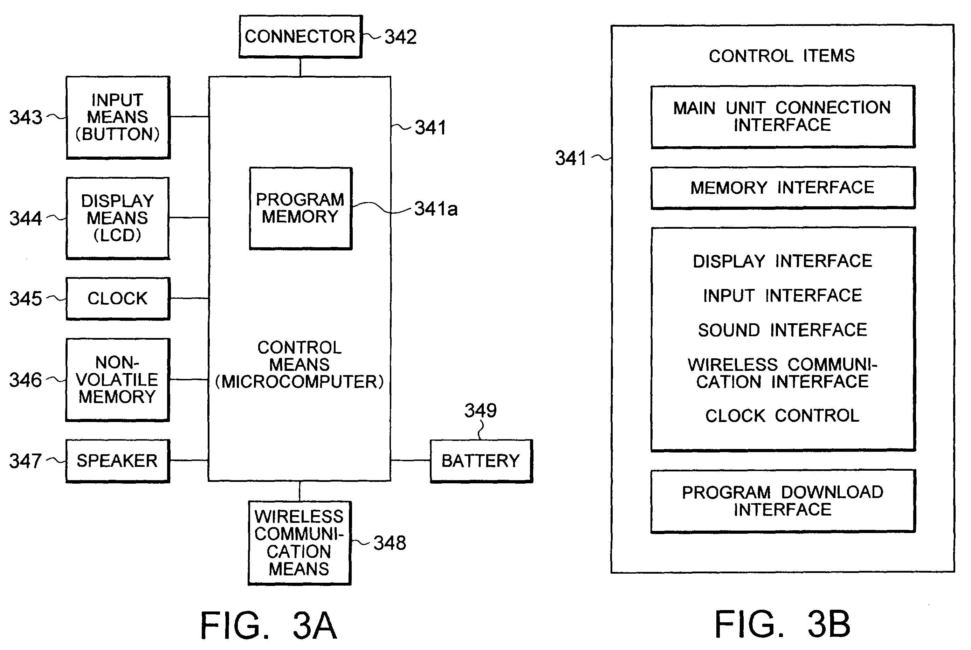

The elements of the principal sections thereof are now described with reference to Fig. 3. Similarly to a standard memory card, the memory card device 300 comprises control unit 341 for controlling operations, a connector 342 for connecting to a slot in an information device, or the like, and a non-volatile memory 346 for storing data.

The control unit 341 is constituted by a microcomputer, for example, which contains a program memory section 341a forming program storing unit. For the non-volatile memory 346, it is possible to use a semiconductor memory element, such as a flash memory, which retains the state of stored information even when the power supply is switched off.

The memory card device 300 comprises, in addition to the elements described above: a button switch 343 forming operation (event) input unit for operating the stored program; a display screen 344, such as a liquid-crystal display device (LCD), or the like, for displaying in accordance with the aforementioned program; wireless communicating unit 348 for carrying out communication by unit of infrared rays, or the like, with other memory cards, or the like; and a small-scale battery 349 for supplying electrical power to the various sections described above. Since the memory card device 300 is provided with an internal battery 349, it is able to operate independently, even when separated from the video game device main unit 200.

Moreover, the memory card device 300 is also provided with a clock 345, a speaker 347 operable as sound generating unit for generating sounds in accordance with the aforementioned program, and the like. Each of the sections described above is connected to the control unit 341, and is operated under the control of the control unit 341.

Fig. 3B shows the elements controlled by the control unit 341. A standard memory card 253 is provided only with a main unit connection interface to the video game device main unit 200, and a memory interface for inputting and outputting data to and from the memory, but in this memory card device 300, a display interface, operation input interlace, sound interface, wireless communications interface, clock control and program download interface, and the like, are provided in addition to the aforementioned interfaces.

The memory card device 300 has a function for downloading an application program from the video game device main unit 200 and storing said program in the program memory section 341a of the microcomputer 341, and therefore it is possible readily to change the application program, or various driver software, operated in the memory card 340.

The confrontation-type video game system 100 is constituted by the video game device main unit 200 and the memory card device 300 described above. Next, the rules of a card game which is suitable for this system will be described.

This card game is a game played by two players, wherein an image corresponding to a table in an actual card game is displayed on the display device 120, and the contents of individual hands of cards are displayed on the memory card devices 300A, 300B.

All of the cards held by a player are stored in a virtual region called the 'bag'. In a game, any 40 cards are previously selected from the 'bag' to form a group of cards known as the 'deck'. In other words, in this game, the two players respectively form a deck from cards in their own 'bags'.

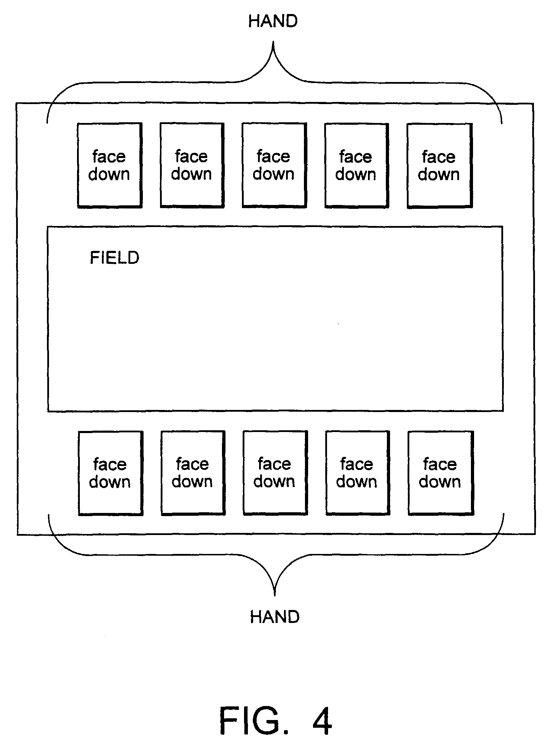

When a game is started, a display such as that in Fig. 4 is shown on the display device 120. A hand is randomly selected from each deck and displayed, but at this stage the hands are displayed in a state where the contents of the cards cannot be seen, in other words, they are displayed face down. A player selects a card to be submitted from his or her own hand to the field, and the selected card is moved to the field, still in a concealed state. At this stage, the player selects the status of the submitted card as either 'attack' or 'defense'. A card selected for attack is immediately displayed as an upward-facing card, in such a manner that either player can see the details of the card. Moreover, when selecting attack, the opposing player also selects a card to be the subject of attack from the cards laid to the playing field, and the card selected here is also displayed face upwards. The cards of both players are submitted to the field one at a time.

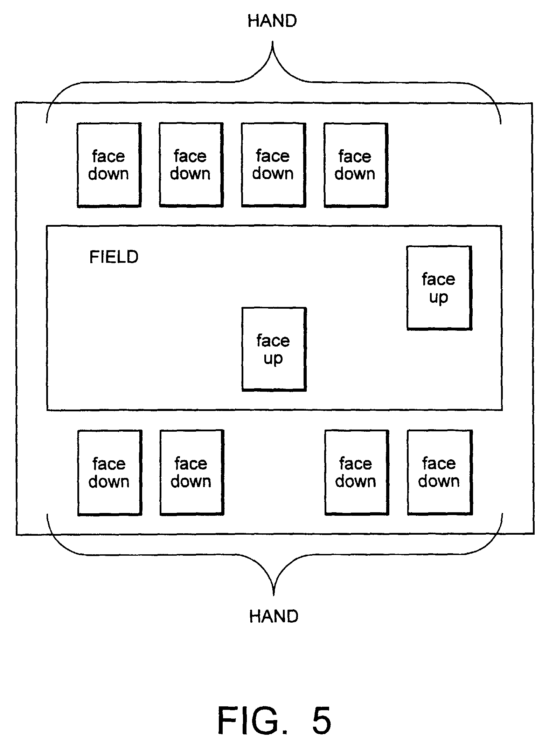

Fig. 5 shows a display example of the display device 120 when one player declares an attack on a card of the other player.

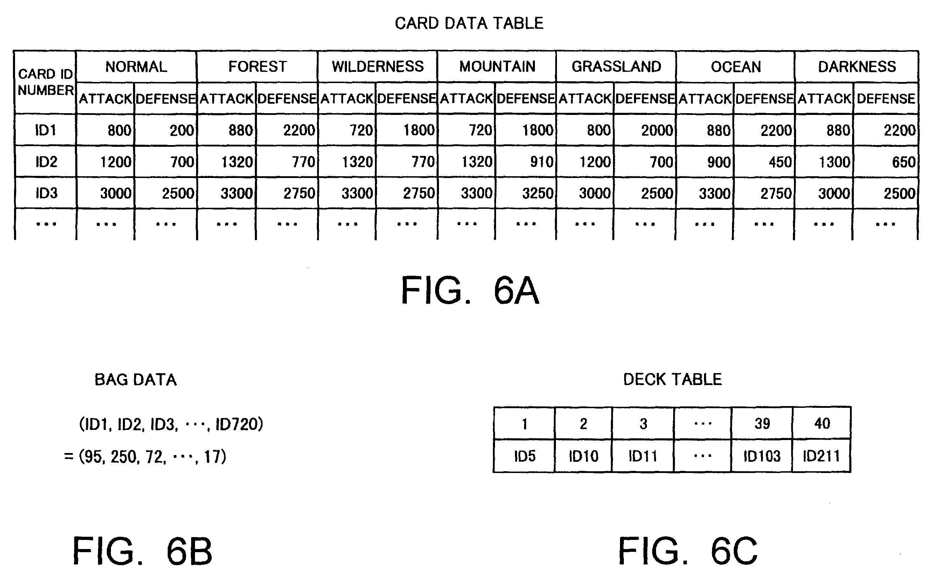

The data saved to the memory card device 300 includes a card data table, bag data and deck table, which are described below. Fig. 6 shows an example of a card data table (a), bag data (b), a deck table (c), respectively. As shown in the card data table (a), there are various types of fields, namely, normal, forest, wilderness, mountain, grassland, ocean, and darkness. Each card has an individual ID number, and the card data table is constituted by corresponding attack values and defense values for each field. All of the cards contained in the bag are given ID numbers from first through N-th ones, as mentioned before, and the numbers of the cards corresponding to the respective ID numbers are kept or collected in order. (For example, an n-th ID number selected from the first through the N-th ones expresses the number of the card whose card ID number is n.)

This data is called bag data. In the case of the bag data illustrated here, there are approximately 720 types of cards and approximately 250 cards of each type can be stored. Moreover, in a completed deck, a deck table is constituted by storing correlations between the card ID numbers of the 40 cards forming the deck and the card sequence relationship (in-deck number) of each card within the deck. Since these tables are stored in the memory card device 300, it is possible to create and revise decks with the memory card device 300 also.

When two players compete against each other, the respective memory card devices 300A, 300B of the two players are mutually connected by unit of the video game device main unit 200 and the memory interfaces 151, 152, and data is loaded from the memory card devices 300A, 300B into the video game device main unit. The loaded data includes a deck table, and the video game device main unit 200 refers to this deck table and displays an in-deck number corresponding to the card ID number of a concealed card. The player refers to the deck table using the memory card device 300, finds the card ID number corresponding to the in-deck number displayed, and then finds the attack value/defense value of the card having the obtained card ID number, by the card data table. The value is subsequently being displayed on the screen.

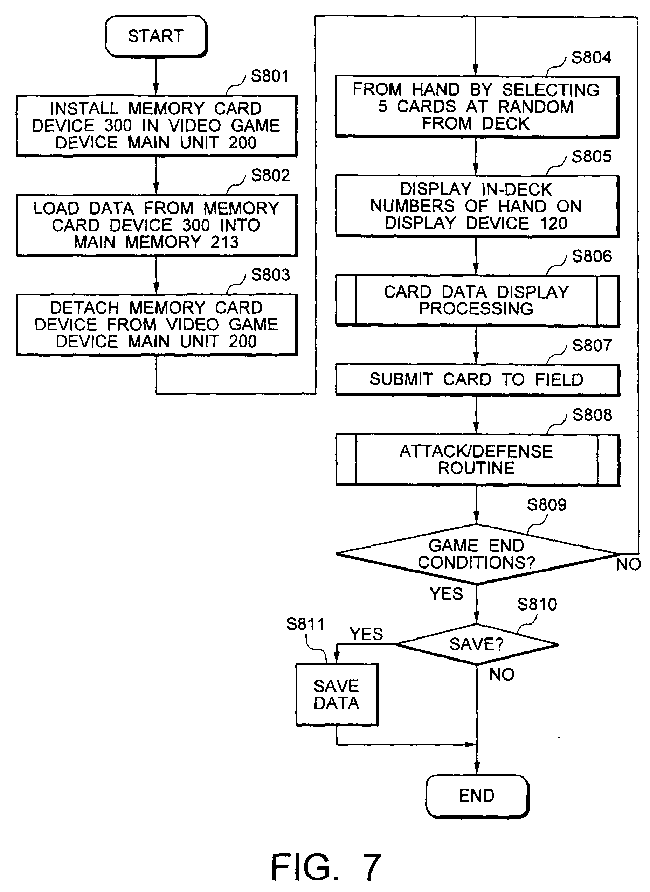

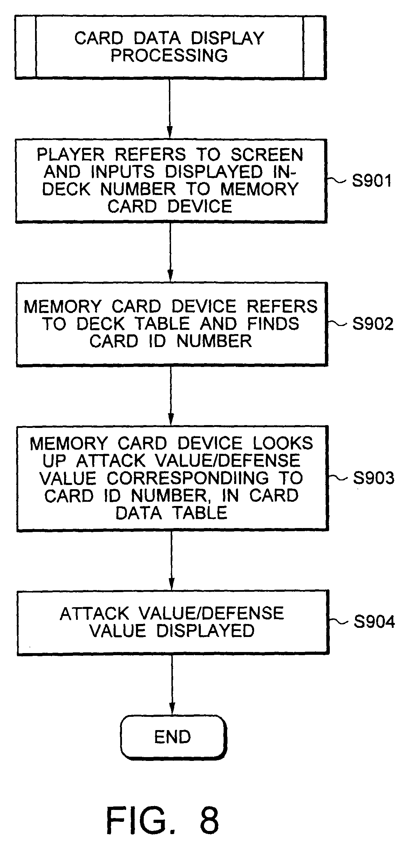

Next, by referring to the flowcharts in Fig. 7 and Fig. 8, a description will be given of the operation of the video game device main unit 200 and the memory card devices 300 when a card game of the kind described above is implemented in a confrontation-type video game system 100.

Initially, the video game device main unit 200 and the memory card devices 300 are connected memory card interfaces 151 and 152 (step S801). Thereupon, saved data in the memory card devices 300, in other words, a card data table, bag data and a deck table are loaded into the main memory 213 of the video game device main unit 200 (step S802). After loading the data, the memory card devices 300 are detached from the video game device main unit 200 (step S803).

At this stage, the same data is stored in the video game device main unit 200 and the memory card devices 300.

Thereupon, a contest between the players begins. Firstly, the video game device main unit 200 selects five cards at random from the respective decks to create a hand for each player (step S804). The cards in the hand are displayed in a concealed state on the display device 120, but at this stage, the in-deck number of the cards are displayed alongside each card (step S805). Each player then implements card data display processing, described hereinafter, in his or her own memory card device 300, by reference to the attack value and defense value of the cards in their own hands and selecting appropriate cards (step S806).

When the cards to be submitted to the field have been determined with reference to the memory card device 300, each player then selects one card from the cards displayed on the display device 120 using the controllers 111, 112, and declares attack or defense for that card. In the case of attack, the player also selects a card to be the subject of the attack, from the cards laid to the playing field by the opposing player, and then moves this card into the field (step S807). When the cards of the two players have been moved into the field, the video game device main unit 200 refers to the respective attack value/defense value of the two cards in the field, and conducts processing for determining the victory and defeat between the two cards, and the like, in accordance with a predetermined routine (step S808).

Provided that the game end conditions are not satisfied at this stage, the reduced hands are replenished from the decks, whereupon the sequence returns to step S804, but if the aforementioned conditions have been satisfied, then data is saved, if necessary, and the game is ended (steps S809, S810, S811).

To describe the card data display processing (step S806) with reference to Fig. 8, firstly, a player inputs the in-deck number of a desired card from the hand displayed on the display device 120, to the memory card device 300 (step S901). Thereupon, the memory card device 300 refers to the deck table and searches from the card ID number corresponding to the in-deck number input at step S901 (step S901).

Thereupon, the memory card device 300 searches for the attack value/defense value of the identified card ID number, by reference to the card data table (step S903).

The memory card device 300 then displays the attack value/defense value of the search result on the screen of the memory card device 300 (step S904).

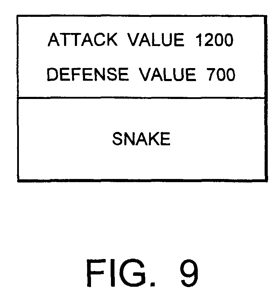

Fig. 9 is an example of a screen displayed on a memory card device 300 at this stage. In this example, an attack power or defense power in a normal field is displayed in the upper portion of the screen. Moreover, here, the word 'snake' is displayed on the screen as the name of the card, and this can be achieved by, for example, providing a list of card names corresponding to card ID numbers in the card data table, and displaying the contents thereof.

By repeating card data display processing in this way, a player is able to verify the cards in his or her own hand, without revealing them to the opponent. This is because the in-deck numbers displayed on the display device 120 are unrelated to the card ID numbers.

The foregoing description was described in regular order of the sequence of an image display method performed by a confrontation-type video game system 100. However, it can be understood readily by anyone working in this field that this system can also be applied readily to all types of games played in a confrontation fashion between a plurality of players using a video game device main unit 200. In addition, different players are allowed to receive different information, such as common card games like trump, or the like, or mah-jong, for instance.

According to the present invention, it is possible to couple a main unit game device referred to simultaneously by a plurality of players, and the information processing devices of two data display devices used exclusively and respectively by the users. As a result, both information to be shared by all players and information to be revealed only to a particular player can be provided simultaneously. Thereby, when playing a card game, for instance, in a video game device main unit, it is possible to select the party to which information relating to the cards laid to the playing area and information relating to the cards in a player's own possession is to be transmitted.

Moreover, since the foregoing can be achieved without providing a special interface or special controllers in the video game device main unit, as in the conventional technology, general compatibility is good and costs can be suppressed. Moreover, there is no effect at all on the implementation of other games not relating to the present invention in the video game device main unit.

Furthermore, since the development of the game is focused on the main unit of the video game device, it is possible for the users to communicate with each other whilst playing the game, thereby increasing the sense of unity of the participants in the game.

In the foregoing, the present invention was described on the basis of an embodiment, but the present invention is not limited to this, and naturally modifications and improvements to the same are possible within the normal scope of knowledge of people working in this field.

## Claims

1. A display method of playing a confrontation-type video game by jointly using a video game device main unit and at least one data display device and by displaying items on either one of or both of the video game device main unit and the data display device, said video game device main unit comprising interfaces for transferring data with external devices and controllers for receiving input operations, said data display device comprising an interface corresponding to said interlaces, display means and input means for receiving input operations, said display method comprising:
a first step of connecting said video game device main unit and data display device by means of said interfaces;
a second step of creating data associated with said items in the video game device main unit;
a third step of transferring the data created in said second step from the video game device main unit to the data display device by means of said interfaces;
a fourth step of releasing the connection made in said first step;
a fifth step of displaying, on the video game device main unit, a portion of the data created at said second step;
a sixth step of displaying on the data display device a further portion of the data displayed at said fifth step, by said display means; and
a seventh step of executing predetermined processing by the use of the video game device main unit with reference to the further portion of data displayed at said fifth step, in response to input operations performed via a controller.

2. A display method of playing a confrontation-type video game by jointly using a video game device main unit and at least one data display device and by displaying items on either one of or both of the video game device main unit and the data display device, said video game device main unit comprising interfaces for transferring data with external devices and controllers for receiving input operations, said data display device comprising an interface corresponding to said interfaces, display means and input means for receiving input operations, said display method comprising:
a first step of connecting said video game device main unit and data display device by means of said interfaces;
a second step of creating data associated with said items in the data display device;
a third step of transferring the data created in said second step from the data display device to the video game device main unit by means of said interfaces;
a fourth step of releasing the connection made in said first step;
a fifth step of displaying, on the video game device main unit, a portion of the data transferred at said third step;
a sixth step of displaying on the data display device a further portion of the data displayed at said fifth step, by said display means; and
a seventh step of executing predetermined processing by the use of the video game device main unit with reference to the further portion of data displayed at said fifth step, in response to input operations performed via a controller.

3. The method according to claim 1 or 2,
wherein a single video game device main unit and a plurality of data display devices are used and said second step creates data for each data display device.

4. The method according to claim 1, 2, or 3,
wherein the data transferred at said third step is saved data for a game.

5. The method according to any one of claims 1 to 4;
wherein said items respectively represent a playing card, a mah-jong tile or a chess piece in a game.

6. A computer-readable storage medium storing a first program and a second program,
said first program being a confrontation-type video game program executed in a video game device main unit comprising an interface for transferring data with external devices and controllers for receiving input operations and implemented whilst displaying items associated with each controller,
said second program being executed by a data display device comprising an interface corresponding to said interfaces, display means, input means for receiving input operations and program executing means;
wherein said first program makes the video game device main unit execute:
a process 1-1 of creating data associated with said items;
a process 1-2 of transferring data created by said process 1-1 to the data display device via said interface;
a process 1-3 of displaying a portion of the data created by said process 1-1;
a process 1-4 of implementing predetermined processing A with reference to the data displayed by said process 1-3, in response to input operations received via a controller;
and said second program makes the data display device execute:
a process 2-1 of receiving data created by said process 1-1 from the video game device main unit by means of said interfaces]; and
a process 2-2 of displaying a further portion of the data displayed by the video game device main unit at said process 1-3 by said display means.

7. A computer-readable storage medium storing a first program and a second program,
said first program being a confrontation-type video game program executed in a video game device main unit comprising an interface for transferring data with external devices and controllers for receiving input operations and implemented whilst displaying items associated with each controller,
said second program being executed by a data display device comprising an interface corresponding to said interfaces, display means, input means for receiving input operations and program executing means;
wherein said first program makes the video game device main unit execute:
a process 1-1 of receiving data from the data display device by means of said interfaces;
a process 1-2 of displaying a portion of the data received by said process 1-1; and
a process 1-3 of implementing predetermined processing A with reference to the data displayed by said process 1-2, in response to input operations received via a controller;
and said second program makes the data display device execute:
a process 2-1 of creating data associated with said items;
a process 2-2 of transferring data to the video game device main unit by means of said interfaces; and
a process 2-3 of displaying a further portion of the data displayed on the video game device main unit by said process 1-2 on said display means.

8. The storage medium according to claim 6 or 7, wherein said first program is applied to a plurality of data display devices.

9. A computer-readable storage medium storing a first program, a second program, a third program and a fourth program,
said first and third program being confrontation-type video game programs executed in a video game device main unit comprising an interface for transferring data with external devices and controllers for receiving input operations and implemented whilst displaying items associated with each controller,
said second and fourth program executed by a data display device comprising an interface corresponding to said interfaces, display means, input means for receiving input operation and program executing means;
wherein said first program makes the video game device main unit execute:
a process 1-1 of creating data associated with said items;
a process 1-2 of transferring data created by said process 1-1 to the data display device via said interfaces;
a process 1-3 of displaying a portion of the data created by said process 1-1; and
a process 1-4 of implementing predetermined processing A with reference to the data displayed by said process 1-3, in response to input operations received via a controller;
said second program makes the data display device execute:
a process 2-1 of receiving data created by said process 1-1 from the video game device main unit by means of said interfaces; and
a process 2-2 of displaying a further portion of the data displayed by the video game device main unit in said process 1-3 on said display means;
said third program makes the video game device main unit execute:
a process 3-1 of receiving data from the data display device by means of said interfaces;
a process 3-2 of displaying a portion of the data received by said process 1-1; and
a process 3-3 of implementing predetermined processing A with reference to the data displayed by said process 3-2, in response to input operations received via a controller;
and said fourth program makes the data display device execute:
a process 4-1 of creating data associated with said items;
a process 4-2 of transferring data to the video game device main unit by means of said interfaces; and
a process 4-3 of displaying a further portion of the data displayed on the video game device main unit by said process 3-2 by said display means.

10. The storage medium according to claim 9, wherein said first and third programs are applied to a plurality of data display devices.

11. The storage medium according to claim 8 or 10, wherein said processing A makes the video game device main unit execute:
processing for displaying images previously associated with data referenced for each data display device, in correspondence with each data display device; and
processing for comparing the referenced data for each data display device.

12. The storage medium according to claims 6 to 11, wherein said items respectively represent a playing card, a mah-jong tile or a chess piece in a game.

13. A confrontation-type video game system comprising a main game device provided with a plurality of controllers, and a data display device, for implementing a confrontation type of game whilst displaying items associated with each of said controllers,
wherein said video game device main unit comprises:
an interface for transferring data with the data display device;
a controller for receiving input operations;
data creating means for creating data associated with said items;
means for transferring data to the data display device by means of said interface;
extracting and displaying means for displaying a portion of the data created by said data creating means; and
means for executing predetermined processing A by reference to a further portion of the data displayed by said extracting and displaying means, in response to input operations received via a controller; and
said data display device comprises:
an interface corresponding to said interface;
means for receiving data from the video game device main unit by means of said interface;
display means;
input means for receiving input operations; and
means for displaying a further portion of the data displayed by said extracting and displaying means, in response to input operations received via said input means.

14. A confrontation-type video game system comprising a main game device provided with a plurality of controllers, and a data display device, for implementing a confrontation type of game whilst displaying items associated with each of said controllers,
wherein said video game device main unit comprises:
an interface for transferring data with the data display device;
a controller for receiving input operations;
extracting and displaying means for displaying a portion of the data received from the data display device via said interface; and
means for executing predetermined processing A by reference to a further portion of the data displayed by said extracting and displaying means, in response to input operations received via the controller; and
said data display device comprises:
an interface corresponding to said interface;
display means;
input means for receiving input operations;
data creating means for creating data associated with said items;
means for transferring data created by said data creating means to the video game device main unit by means of said interface; and
means for displaying a further portion of the data displayed by said extracting and displaying means, by said display means.

15. The system according to claim 13 or 14, comprising a single video game device main unit and a plurality of data display devices.

16. The system according to claim 13, 14 or 15, wherein said processing A comprises:
processing for displaying images previously associated with data referenced for each data display device, in correspondence with each data display device; and
processing for comparing the referenced data for each data display device.

17. The system according to claim 13, 14, 15 or 16, wherein said interface is a memory card interface in the video game device main unit and said data display device comprises the function of an external storage device of the video game device main unit.

18. The system according to claim 17, wherein said data display device is a memory card device.

19. The system according to any one of claims 13 to 18, wherein said items respectively represent a playing card, a mah-jong tile or a chess piece in a game.
